# EUROPEAN PATENT APPLICATION

(11) **EP 4 718 659 A1**
(43) Date of publication of application: **01.04.2026**
(21) Application number: 25202949.1
(22) Date of filing: 18.09.2025
(51) Int. Cl.: H02J 3/26, B60L 3/00, B60L 53/14, H02J 7/02

(54) **METHOD FOR CHARGING A VEHICLE**

(30) Priority: 27.09.2024 SE 2450967
(71) Applicant: Charge-Amps AB, 169 75 Solna (SE)
(72) Inventor: JONSSON, Fredrik, 169 75 SOLNA (SE)
(74) Representative: Brann AB

(57) **Abstract**

The disclosure relates to a method performed by an electric vehicle supply equipment, EVSE (110), configured to provide power from a 3-phase power grid (120) to a vehicle (140), the method comprising: controlling a first switch (S1) of the EVSE to couple neutral (N) of the 3-phase power grid (310) to a first output port (OP1) at a first point in time (P1), controlling a second switch (S2) of the EVSE to couple a first phase (L1) of the power grid (120) to a second output port (OP2) at a second point in time (P2), detect a first electric connection (210) between the second output port (OP2) and a third output port (OP3), controlling a third switch (S3) of the EVSE (110) to couple a second phase (L2) of the power grid (120) to a third output port (OP3), wherein the third switch (S3) is controlled at a third point (P3) in time if the first electric connection is not detected, or at a fourth point in time (P4) if the first electric connection is detected, detect a second electric connection (220) between a fourth output port (OP4) and the second output port (OP2) or a third electric connection (230) between the fourth output port (OP4) and a third output port (OP3), controlling a fourth switch (S4) of the EVSE (110) to couple a third phase (L3) of the power grid (120) to the fourth output port (OP4), wherein the fourth switch (S4) is controlled: at a fifth point in time (P5) if the second electric connection (220) is detected, or at a sixth point in time (P6) if none of the second electric connection (220) and the third electric connection (230) are detected, or at a seventh point in time (P7) if the third electric connection (230) is detected between the fourth output port (OP4) and the third output port (OP3), wherein the first point in time (P1), the second point in time (P2), the third point in time (P3), the fourth point in time (P4), the fifth point in time (P5), the sixth point in time (P6) and the seventh point in time (P7) are each unique.

## Description

### TECHNICAL FIELD

The present invention relates to a method performed by a charger to reduce short-circuit currents when charging an electric vehicle.

### BACKGROUND

An electric vehicle supply equipment, EVSE, is typically an apparatus for supplying electric energy for the recharging of a vehicle, such as plug-in electric vehicles, e.g., electric cars and plug-in hybrids.

The EVSE is typically provided with a charging cable to connect the EVSE to the vehicle.

When installing the EVSE the equipment must be dimensioned to support calculated short-circuit currents, e.g., in a case the charging cable or vehicle is damaged and short-circuits the electric energy.

The short-circuit currents are typically calculated according to methods defined in a standard, and are based on different scenarios, e.g., single phase short-circuit, dual phase short-circuit and three phase short-circuit.

A main function of an EVSE is to connect a grid supplying the electric energy to the vehicle. This typically involves closing the connection, also referred to as "make" and opening the connection, also referred to as "break". This is typically performed by a switch.

In a case where there is a short-circuit in the charging-cable or in the internal charger of the vehicle, make is the worst scenario for a switch in the EVSE closing the connection.

The EVSE and components thereof typically needs to be dimensioned for the worst-case short-circuit scenario. E.g., a scenario where all three phases are electrically coupled or short circuited.

This has the disadvantage to make the EVSE bulkier, more complex and more expensive.

Thus, there is a need for an improved EVSE.

### OBJECTS OF THE INVENTION

An objective of embodiments of the present invention is to provide a solution which mitigates or solves the drawbacks and problems described above.

### SUMMARY OF THE INVENTION

The above and further objectives are achieved by the subject matter described herein. Further advantageous implementation forms of the invention are further defined herein. The invention is set out in the appended claims. The scope of the invention is defined by the claims, which are incorporated into this section by reference.

According to a first aspect of the present disclosure the above object is achieved by a method performed by an electric vehicle supply equipment, EVSE, configured to provide power from a 3-phase power grid to a vehicle, the method comprising: controlling a first switch of the EVSE to couple neutral of the 3-phase power grid to a first output port at a first point in time, controlling a second switch of the EVSE to couple a first phase of the power grid to a second output port at a second point in time, detect a first electric connection between the second output port and a third output port, controlling a third switch of the EVSE to couple a second phase of the power grid to a third output port, wherein the third switch is controlled at a third point in time if the first electric connection is not detected, or at a fourth point in time if the first electric connection is detected, detect a second electric connection between a fourth output port and the second output port or a third electric connection between the fourth output port and a third output port, controlling a fourth switch of the EVSE to couple a third phase of the power grid to the fourth output port, wherein the fourth switch is controlled: at a fifth point in time if the second electric connection is detected, or at a sixth point in time if none of the second electric connection and the third electric connection are detected, or at a seventh point in time if the third electric connection is detected between the fourth output port and the third output port, wherein the first point in time, the second point in time, the third point in time, the fourth point in time, the fifth point in time, the sixth point in time and the seventh point in time are each unique.

In one embodiment according to the first aspect, the first point in time, the second point in time, the third point in time, the fourth point in time, the fifth point in time, the sixth point in time and the seventh point in time are selected from points in time where measured voltage differences between pairs of phases or measured voltage differences between a phase and neutral of the 3-phase power of the power grid are substantially zero.

In one embodiment according to the first aspect, the second point in time is selected adjacent to a point in time of a zero-crossing of the first phase.

In one embodiment according to the first aspect, the third point in time is selected adjacent to a point in time of a zero-crossing of the second phase and the fourth point in time is selected adjacent to a point in time of substantially equal voltage between the first phase and the second phase.

In one embodiment according to the first aspect, the fifth point in time is selected adjacent to a point in time of substantially equal voltage between the first phase and the third phase.

In one embodiment according to the first aspect, the sixth point in time is selected adjacent to a point in time of a zero-crossing of the third phase.

In one embodiment according to the first aspect, the seventh point in time is selected adjacent to a point in time of substantially equal voltage between the second phase and the third phase.

In one embodiment according to the first aspect, the first electric connection, the second electric connection and the third electric connection between output ports are detected if measured voltage differences between respective output ports are correlated, and not detected if measured voltage differences at respective output ports are not correlated.

In one embodiment according to the first aspect, the first electric connection, the second electric connection and the third electric connection between output ports are detected if measured phase angles differences between respective output ports are correlated, and not detected if measured phase angle differences at respective output ports are not correlated.

In one embodiment according to the first aspect, wherein the method is terminated, and the switches are opened when any of the electric connections are detected.

According to a second aspect of the present disclosure the above object is achieved by a control arrangement adapted to be comprised in an EVSE, the control arrangement comprising: a processor, and a memory, said memory containing instructions executable by said processor, wherein said control arrangement is configured to perform the method according to the first aspect.

According to a third aspect of the present disclosure the above object is achieved by an Electric Vehicle Supply Equipment, EVSE, configured to provide power from a 3-phase power grid to a vehicle, the EVSE comprising the control arrangement according to the second aspect.

Further aspects of the disclosure are shown in the attached drawings.

### BRIEF DESCRIPTION OF THE DRAWINGS

It should be appreciated that like reference numerals are used to identify like elements illustrated in one or more of the figures.
**Fig. 1** shows a charging system according to the present disclosure.
**Fig. 2A-C**illustrates examples of electric connections creating a short circuit.
**Fig. 3** Illustrates an Electric Vehicle Supply Equipment, EVSE, according to one or more embodiments of the present disclosure.
**Fig. 4** illustrates points in time of a 3-phase power provided by a grid.
**Fig. 5** shows a flowchart of a method according to one or more embodiments.
**Fig. 6** shows a computer according to one or more embodiments of the present disclosure.

A more complete understanding of embodiments of the invention will be afforded to those skilled in the art, as well as a realization of additional advantages thereof, by a consideration of the following detailed description of one or more embodiments.

### DETAILED DESCRIPTION

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

In the present disclosure the term "EVSE" denotes an electric vehicle charging station or an apparatus for supplying electric energy to plug-in electric vehicles.

In the present disclosure, the term "3-phase power" or "3-phase AC power" denotes AC power where three separate phases of AC power are provided an associated with a nominal maximum amplitude and different phase angles, typically separated with 120 degrees.

In the present disclosure, the term "switch" relates to a controllable or actuatable switch configured to alternate between at least an open state and a closed state. In the open state, no current can flow through the switch, e.g., between contact points of a relay. In the closed state, current can flow through the switch, e.g., between contact points of the relay. A transition from open state to closed state is referred to as "make", e.g., closing an open contact of a relay. By activating an actuator, the contact points complete the circuit and allow the current to flow from one contact point to the other. A transition from closed state to open state is referred to as "break", e.g., opening a closed contact of a relay. By activating an actuator, the contact points open the circuit and no longer allow the current to flow from one contact point to the other. The present disclosure relates particularly to make scenarios where an EVSE starts to provide 3-phase alternating current, AC, power to a vehicle. In conventional solutions, all three phases of the power provided to the EVSE from an electrically connected grid are typically activated or electrically connected to the charging cable and vehicle simultaneously or nearly simultaneously.

The connections are typically made by controlling switches, such as relays, for each phase, and optionally for a neutral lead, simultaneously. If a short-circuit exists anywhere between output ports of the EVSE and the charger in the vehicle, a high make current will run through the relays until a fuse or other safety arrangement triggers and cuts of the power. The relays and/or switches must therefore be dimensioned to handle the make short-circuit current.

The standard IEC 60909 defines the peak short-circuit current as the maximum instantaneous value of the short-circuit current. This is equivalent to the closing and latch peak duty in ANSI-approved standards.

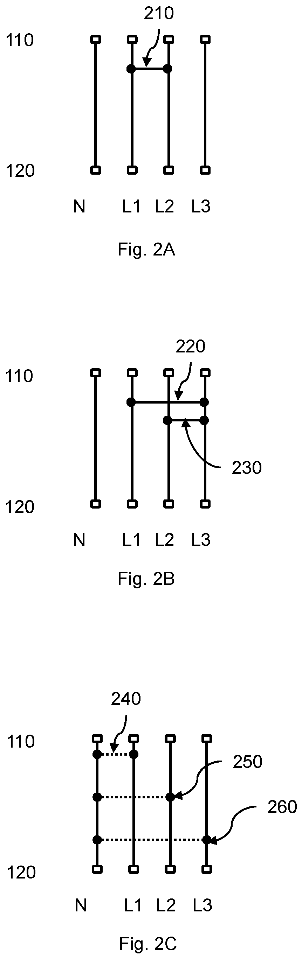

The short-circuit current typically calculated for different scenarios, e.g., single phase short-circuit or IK1, dual phase short-circuit or IK2, and three phase short-circuit or IK3. In the IK2 scenario the switches need to be dimensioned for a higher short-circuit current than in the IK1 scenario etc. This is further described in relation to Fig. 2.

In other words, current implementations of EVSEs needs to be dimensioned with switches that can handle a make IK3 scenario and potentially maximum voltage difference between two phases. This results in complex design, large and bulky design to house the switches and more expensive designs.

The present disclosure shows that by activating the switches coupling the different phases of the electric grid at different unique points in time, the make short-circuit scenario that the switches must be dimensioned for can be reduced, and therefore less complex equipment can be used, reduced footprint of the equipment can be achieved, and cost can be reduced.

In other words, to minimize the energy at a make operation of a switch, e.g., a relay.

The present disclosure discloses that by activating the switches at unique points in time, e.g., subsequently, the make short-circuit scenarios can be reduced to less severe scenarios. Further, by activating switches when electrical phases of the grid at a zero-crossing or when two phases have the same voltage, i.e., at a minimum voltage difference, the maximum short-circuit current can be further reduced.

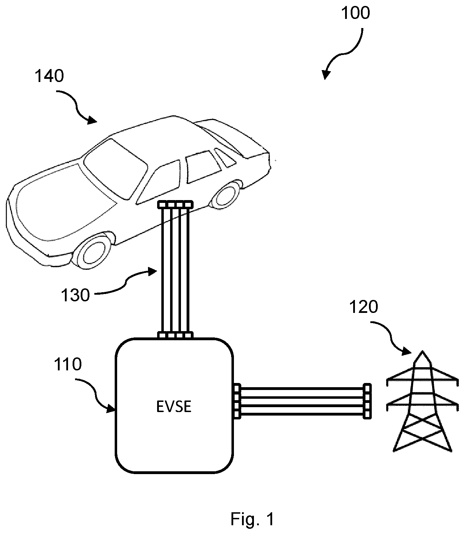

Fig. 1 shows a charging system 100 according to the present disclosure. The system typically comprises an EVSE 110 configured to provide 3-phase AC power from a grid 120 to a vehicle 140 via a charging cable 130.

The EVSE 110 is typically electrically coupled to the grid 120 via fixed installation, but may alternatively electrically coupled to grid 120 via a removable cable with connectors. This effectively provides 3-phase AC power having three phase connections, and optionally a neutral connection, from the grid 120 to the EVSE 110.

The EVSE, when activated, then typically provides 3-phase AC power to the vehicle 140 via output ports. The output ports may e.g., be located in an output socket as pin or tube connector elements. Any other suitable technique to provide output ports, known to a skilled person, may be used.

The power is transferred from the output ports to the vehicle 140 using a charging cable, typically provided with connectors matching sockets at the EVSE and the vehicle 140. It is understood that wireless charging may be used without departing from the present disclosure.

When there occurs a fault in the charging cable and/or the vehicle, a short-circuit may occur and create an electric connection between phase connections or between a phase connection and the neutral connection. When the EVSE tries to make the connection to the vehicle, the switches must be dimensioned to handle the corresponding make short-circuit current.

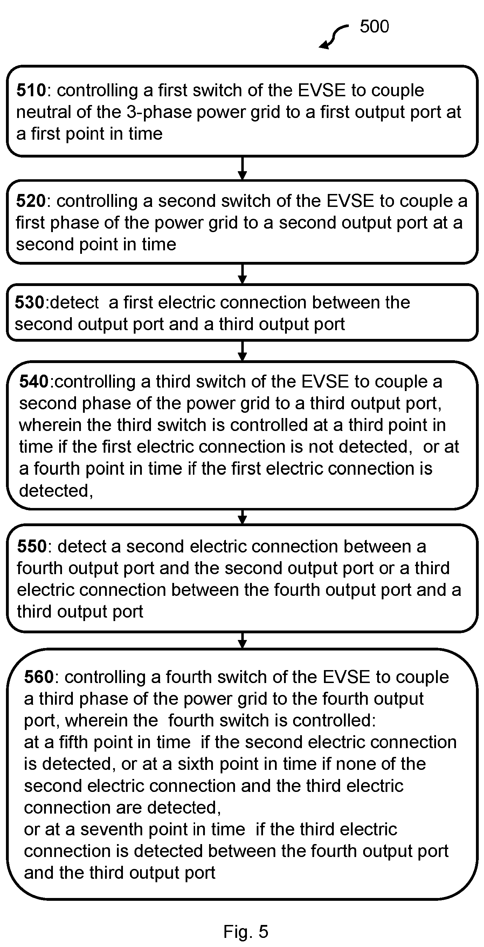

It is understood that the system 100 also includes one or more fuses that will cut off supply of power from the grid 120 if a predetermined current is exceeded. If so, the EVSE will typically loose power and the method described in relation to Fig. 5 will normally be terminated.

**Fig. 2A-B** illustrates examples of electric connections creating a short circuit. Although the electric phases are shown as L1, L2, and L3 for illustrative purposes, the phase order may be selected as most appropriate without departing from the present disclosure.

The IEC 60909 standard defines an IK1 scenario as when there is a short-circuit or electric connection between a phase connection L1-L3 and a neutral connection N.

The IEC 60909 standard defines an IK2 scenario as when there is a short-circuit or electric connection between a first and second phase connection, e.g., L1 and L2.

The IEC 60909 standard defines an IK3 scenario as when there is a short-circuit or electric connection between a first, second and third phase connection, e.g., L1 to L2 and L2 to L3.

**Fig. 2A** Shows a fault that creates an electric connection 210 between a first phase L1 and a second phase L2. When voltage levels at respective output ports are measured, they will appear to be substantially the same due to the electric connection 210.

The present disclosure exploits this to detect that a short-circuit has occurred between the first phase L1 and the second phase L2.

The IEC 60909 standard defines this as a IK2 scenario.

In **Fig. 2B** Shows a fault that creates an electric connection 220 between the first phase L1 and a third phase L3. The fault further creates an electric connection 230 between the second phase L2 and the third phase L3. When voltage levels at respective output ports are measured, they will appear to be substantially the same due to the electric connections 220,230.

The present disclosure exploits this to detect that a short-circuit has occurred between the first phase L1 and the third phase L3 or between the second phase L2 and the third phase L3.

The IEC 60909 standard defines this as a IK3 scenario.

When voltage levels at respective output ports are measured, they will appear to be substantially the same due to the electric connections 220,230.

In **Fig. 2C** Shows a fault that creates an electric connection between a phase and neutral. This is illustrated with three electric connections 240-260. It is understood that this is also valid for a fault that creates an electric connection between a phase and protective earth.

In a first example, the fault further creates an electric connection 240 between the first phase (connection) L1 and the neutral (connection) N.

The IEC 60909 standard defines this as a IK1 scenario.

In a second example, the fault further creates an electric connection 250 between the second phase (connection) L2 and the neutral (connection) N.

The IEC 60909 standard defines this as a IK1 scenario.

In a third example, the fault further creates an electric connection 260 between the third phase (connection) L3 and the neutral (connection) N.

The IEC 60909 standard defines this as a IK1 scenario.

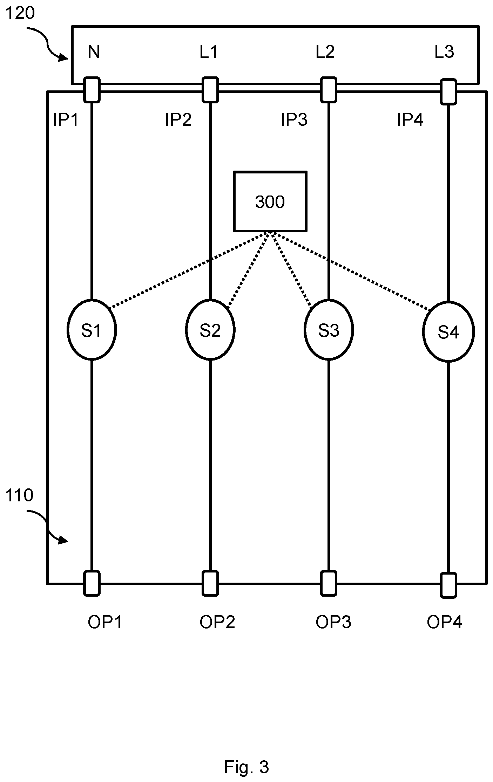

**Fig. 3** Illustrates an EVSE 110 according to one or more embodiments of the present disclosure. The EVSE 110 comprises switches S1-S4 controlled by a control arrangement 300.

The switches are typically configured to activate by closing an electric connection between respective input ports IP1-IP4 and output ports OP1-IOP4 or to activate by opening an electric connection between respective input ports IP1-IP4 and output ports OP1-IOP4. The switches may e.g., be relays, switching circuitry or any other suitable controllable switch known to a person skilled in the art.

The control arrangement 300 is communicatively coupled to the switches S1-S4 and configured to send a control signal to each of the switches S1-S4, e.g., to provide DC control voltage to a relay.

The EVSE 110 is configured to receive 3-phase electric power/alternating current, AC, power from the grid 120 via the input ports IP1-IP4. In one example, the grid 120 provides a first phase connection L1, a second phase connection L2 separated by a phase angle of 120 degrees from the first phase L1, a third phase connection L3 separated by a phase angle of 240 degrees from the first phase L1, and alternatively a neutral N connection or return connection. A current will only flow in the neutral N connection if the load of the three phases is not symmetric.

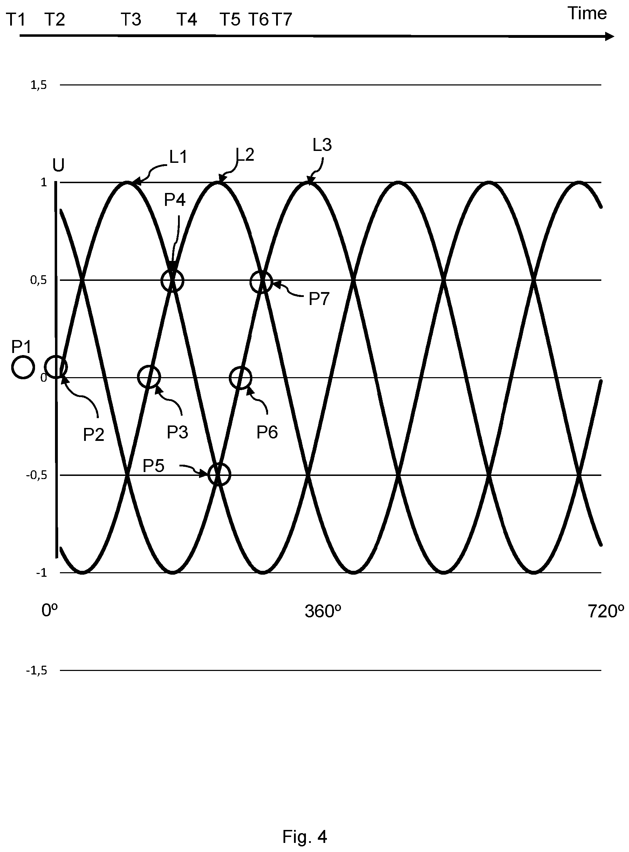

With reference to Fig. 4, the incoming 3-phase power connections and/or neutral connection are provided to the input ports IP1-IP4 of the EVSE and comprises three phases L1-L3, and each pair of phases will have a voltage difference that varies over time. This is further described in relation to Fig. 4.

**Fig. 4** illustrates points in time of the 3-phase power provided by the grid 120.

The present disclosure shows that by selecting the point in time when switches S1-S4 are activated or closed, the make short-circuit scenario that the EVSE must be dimensioned for can be minimized or reduced. Fig. 4 shows an example of amplitudes of 3-phase AC power from the grid 120 over time. Normalized voltage [-1.5 - 1.5] is shown on the vertical axis and phase angle and time are shown on horizontal axes.

Points in time P1-P7 that are selected according to the present disclosure are shown as circles projected on curves representing 3-phase AC power from the grid 120. Points in time selected according to the present disclosure T1-T7 are further shown on a time scale at the top of the figure.

At a first point in time P1, T1 the first switch S1 is activated and/or closed, and a neutral connection is provided to the EVSE from the grid 120, as illustrated in relation to Fig. 3.

At a second point in time P2, T2, the first phase L1 have a zero-crossing, i.e., the voltage level of the first phase L1 is momentarily zero Volt or substantially zero Volt. In other words, a measured voltage level difference between the first phase and the neutral N is substantially zero Volt.

In a similar manner, at a third point in time P3, T3, the second phase L2 have a zero-crossing, i.e., the voltage level of the second phase L2 is momentarily zero Volt or substantially zero Volt.

At a fourth point in time P4, T4, the first phase L1 and the second phase L2 have a crossing, i.e., the voltage level of the first phase L1 and the voltage level of the second phase L2 are equal or substantially the same.

At a fifth point in time P5, T5, the first phase L1 and the third phase L3 have a crossing, i.e., the voltage level of the first phase L1 and the voltage level of the third phase L3 are equal or substantially the same.

At a sixth point in time P6, T6, the third phase L3 have a zero-crossing, i.e., the voltage level of the third phase L3 is momentarily zero Volt or substantially zero Volt.

At a seventh point in time P7, the second phase L2 and the third phase L3 have a crossing, i.e., the voltage level of the second phase L2 and the voltage level of the third phase L3 are equal or substantially the same.

With reference to Fig. 5, the present disclosure relates to a situation when a vehicle is about to be charged with 3-phase AC power from a power grid 120. Effectively this means electrically coupling phases and/or neutral connections of the grid to the vehicle, typically via a charging cable. If a fault has occurred, e.g., in the charging cable and/or the battery charger in the vehicle, a short-circuit situation may occur. Such a situation typically means that there is an electric connection between any of the phases connections and/or an electric connection between any of the phases connections and the neutral connection allowing current to flow with little or no resistance.

In conventional solutions, all of the phases connections and/or the neutral connection are activated simultaneously. In a worst-case scenario, two or more phases are electrically coupled/short-circuited, resulting in an IEC 60909 standard IK3 scenario.

This means that components, in particular the switches S1-S4, must be dimensioned to cope with the make short-circuit current until a fuse in the system 100 cuts the power.

The present disclosure addresses these problems by reducing the worst-case scenario that the components need to be dimensioned for. This is achieved by activating the switches S1-S4 at different or unique points in time such that the severity of the worst-case make short-circuit scenario is reduced. I.e., from IK3 to IK2, from IK2 to IK1 etc.

Further, by activating switches when electrical phases of the grid are at a zero-crossing or when two phases have substantially the same voltage, i.e., at minimum voltage difference, the present disclosure reduces the maximum short-circuit current, further reducing requirements on components, such as the switch, with regards to maximum make capacity.

The present disclosure recognizes that actuation time for switches may vary and transitions between open and closed states of the switches are not instantaneous. A typical switch, such as a relay, makes multiple transitions during the tens of milliseconds required to transition from open state to closed state. This is due to effects such as age, operating inertia, mechanical design, and the microscopic condition of the switch-contact surfaces. This is sometimes referred to as "switch bounce".

The present disclosure therefore provides that the switches must be activates adjacent to the points in time P1-P7 illustrated in Fig. 4. Ideally then a "bounce", when switch-contact surfaces make contact, is timed exactly.

**Fig. 5** shows a flowchart of a method 500 according to one or more embodiments. The method 500 is performed by an electric vehicle supply equipment, EVSE 110, configured to provide power from a 3-phase power grid 120 to a vehicle 140. The power grid 120 provides 3-phase alternating current, AC, power to the EVSE 110. The method comprises:
**Step 510:** controlling a first switch S1 of the EVSE to couple neutral N of the 3-phase power grid 310 to a first output port OP1 at a first point in time P1. Output ports and switches are further described in relation to Fig. 3. This step may be optional depending on the application.

At this stage, no short-circuit can occur between output ports as only one connection is active.

In one example, the first switch S1 is a relay and controlling the switch comprises sending a control voltage to the relay.

**Step 520:** controlling a second switch S2 of the EVSE to couple a first phase L1 of the power grid 120 to a second output port OP2 at a second point in time P2.

At this stage, a potential make short-circuit scenario may occur between the neutral connection N and the first phase L1. I.e., a potential IK1 scenario. It is understood that a further potential short-circuit scenario may occur between a protective earth connection (not shown) and the first phase L1.

It is understood that if any of the above mentioned make short-circuit scenario occurs and the current exceeds a predefined limit, a fuse in the system will normally cut off power, and execution of the method will then be terminated.

In one example, a resistor is placed between two phase connections in the vehicle. The EVSE may then detect an electric connection, but the resulting current may be less than the rating of the fuse, and the fuse in the system will then not cut off power, and execution of the method will typically continue.

In one example, the second switch S2 is a relay and controlling the switch comprises sending a control voltage to the relay.

**Step 530:** detect a first electric connection 210 between the second output port OP2 and a third output port OP3.

At this stage, a potential short-circuit scenario may occur between the second output port OP2, providing the first phase L1, and the third output port OP3, providing the second phase L2. I.e., a potential IK2 scenario.

In one example, a voltage level is measured, or a plurality of voltage levels over time are measured, at the second output port OP2 and at the third output port OP3. If the two voltage levels are correlated, the first electric connection 210 is considered to be detected.

In other words, if the voltage levels are correlated or similar, in particular over time, this is a strong indication that an electric connection has been made between phases. As can be seen in Fig. 4, the phases are normally not correlated. As the voltage amplitude following a sinus wave are separated by 120 degrees phase angle. If the voltage of two phases, follow each other it is likely that an electric connection has been made between the two. In one example, the voltage levels of two output ports are substantially the same over a period of time, e.g., 1/50 Hz seconds or a fraction thereof, the electric connection can then be detected. In one example, the phase angles of two output ports are substantially the same over a period of time, e.g., 1/50 Hz seconds or a fraction thereof, the electric connection can then be detected. The same in this context may comprise voltage levels between two output ports having a voltage difference of less than 50% or less than 20% or less than 5%. Any threshold within the range [0%-50%] may be used.

In one embodiment, the method is terminated if the first electric connection is connected.

**Step 540:** controlling a third switch S3 of the EVSE 110 to couple a second phase L2 of the power grid 120 to a third output port OP3, wherein the third switch S3 is controlled at a third point P3 in time if the first electric connection is not detected, or at a fourth point in time P4 if the first electric connection is detected. The third point in time P3 and the fourth point in time P4 are not selected to be identical, rather subsequent in time.

It is understood that if first electric connection 210 is detected and the current, after the third switch S3 is activated, exceeds a predefined limit, a fuse in the system will normally cut off power, and execution of the method will then be terminated.

**Step 550:** detect a second electric connection 220 between a fourth output port OP4 and the second output port OP2 and/or a third electric connection 230 between the fourth output port OP4 and a third output port OP3.

At this stage, a potential short-circuit scenario may occur between the fourth output port OP4 and the second output port OP2 or between fourth output port OP4 and the third output port OP3. I.e., if the first electric connection 210 is previously detected, a potential IK3 scenario.

In one example, a voltage level is measured, or a plurality of voltage levels over time are measured, at the fourth output port OP4, at the third output port OP3 and at the second output port OP2. If voltage levels at any two respective output ports are correlated, the second or third electric connection 220, 230 is considered to be detected.

In other words, if the voltage levels are correlated or similar, in particular over time, this is a strong indication that an electric connection has been made between phases. As can be seen in Fig. 4, the phases are normally not correlated. As the voltage amplitude following a sinus wave are separated by 120 degrees phase angle. If the voltage of two phases, follow each other it is likely that an electric connection has been made between the two.

In one embodiment, the method is terminated if the second and/or third electric connection is detected.

**Step 560:** controlling a fourth switch S4 of the EVSE 110 to couple a third phase L3 of the power grid 120 to the fourth output port OP4, wherein the fourth switch S4 is controlled:
at a fifth point in time P5 if the second electric connection 220 is detected,
or at a sixth point in time P6 if none of the second electric connection 220 and the third electric connection 230 are detected,
or at a seventh point in time P7 if the third electric connection 230 is detected between the fourth output port OP4 and the third output port OP3,
wherein the first point in time P1, the second point in time P2, the third point in time P3, the fourth point in time P4, the fifth point in time P5, the sixth point in time P6 and the seventh point in time P7 are each unique. In other words, note of the points in time P1-P7 are selected to be identical. In one embodiment, the points in time P1-P7 are ordered subsequently in time.

In other words, typically the points in time P1-P7 are selected one after the other in time. However, the points in time P1-P7 may be distributed over multiple periods/cycles of the phases and in varied order without departing from the present disclosure.

It is understood that if the second electric connection 220 is detected or if the third electric connection 230 is detected and the current over the switch, after the fourth switch S4 is activated/closed, exceeds a predefined limit, a fuse in the system will normally cut off power, and execution of the method will then be terminated.

This has the advantage of reducing the severity of the make short-circuit scenario, e.g., IK1-IK3, by activating the output ports of phases of the electric grid 120 at different and/or unique points in time.

In one embodiment, the first point in time P1, the second point in time P2, the third point in time P3, the fourth point in time P4, the fifth point in time P5, the sixth point in time P6 and the seventh point in time P7 are selected from points in time where measured voltage differences between pairs of phases or measured voltage differences between a phase and neutral of the 3-phase power of the power grid 120 are substantially zero.

In other words, by activating switches when electrical phases of the grid are at a zero-crossing or when two phases have substantially the same voltage, i.e., at minimum voltage difference, the present disclosure reduces the maximum make short-circuit current or maximum make energy, further reducing requirements on components with regards to maximum make capacity.

Additionally, or alternatively, the second point in time P2 is selected adjacent to a point in time of a zero-crossing of the first phase L1. In other words, the activation time of the first phase is performed adjacent to or at a point in time when the first phase L1 has relatively low momentary voltage and the short-circuit current is reduced or minimized. To activate the switch adjacent to P2 accounts for the "bounce" of contact elements of the switch, e.g., a relay.

Additionally, or alternatively, the third point in time P3 is selected adjacent to a point in time of a zero-crossing of the second phase L2 and the fourth point in time P4 is selected adjacent to a point in time of substantially equal voltage between the first phase L1 and the second phase L2.. To activate the switch adjacent to P3 or P4 accounts for the "bounce" of contact elements of the switch, e.g., a relay.

In one example, an electric connection is detected between the second output port OP2 and the third output port OP3, and the third switch is then activated or controlled adjacent to a time when the voltage difference between the first phase L1 and the second phase L2 is relatively low or substantially zero and the short-circuit current is reduced or minimized.

Additionally, or alternatively, the fifth point in time P5 is selected adjacent to a point in time of substantially equal voltage between the first phase L1 and the third phase L3.

In one example, an electric connection is detected between the second output port OP2 and the fourth output port OP4, and the fourth switch S4 is then activated or controlled adjacent to a point in time P5 when the (momentary) voltage difference between the first phase L1 and the third phase L3 is relatively low or substantially zero and the short-circuit current is reduced or minimized. To activate the switch adjacent to P5 accounts for the "bounce" of contact elements of the switch, e.g., a relay.

Additionally, or alternatively, the sixth point in time P6 is selected adjacent to a point in time of a zero-crossing of the third phase L3.

In one example, no electric connection is detected between any of the output ports OP2-OP4, and the fourth switch S4 is then activated or controlled adjacent to a point in time P6 when the (momentary) voltage of the third phase L3 is relatively low or substantially zero (at a zero-crossing) and the short-circuit current is reduced or minimized. To activate the switch adjacent to P56 accounts for the "bounce" of contact elements of the switch, e.g., a relay.

Additionally, or alternatively, the seventh point in time P7 is selected adjacent to a point in time of substantially equal voltage between the second phase L2 and the third phase L3.

In one example, an electric connection is detected between the third output port OP3 and the fourth output port OP4, and the fourth switch S4 is then activated or controlled adjacent to a point in time P7 when the (momentary) voltage difference between the second phase L2 and the third phase L3 is relatively low or substantially zero and the short-circuit current is reduced or minimized. To activate the switch adjacent to P7 accounts for the "bounce" of contact elements of the switch, e.g., a relay.

Additionally, or alternatively, the first electric connection, the second electric connection and the third electric connection between output ports are detected if measured voltage differences between respective output ports OP1-OP4 are correlated, and not detected if measured voltage differences at respective output ports are not correlated.

In other words, the voltage levels are correlated or similar if voltage levels "follow" each other or show similar voltage behavior over time, this is a strong indication that an electric connection has been made between phases. As can be seen in Fig. 4, the phases are normally not correlated. The voltage amplitude following a sinus wave and are separated by 120 degrees phase angle. If the voltage of two phases correlate or follow each other it is likely that an electric connection has been made between the two.

In one example, the measured voltage level at the second output port OP2 is 0.74 in normalized voltage and the measured voltage level at the third output port OP3 is 0.75 in normalized voltage. The first electric connection 210 is then considered to be detected.

Additionally, or alternatively, the first electric connection, the second electric connection and the third electric connection between output ports are detected if measured phase angles differences between respective output ports OP1-OP4 correlate, and not detected if measured phase angle differences at respective output ports do not correlate.

In other words, the phase angles are correlated or similar if phase angles "follow" each other or show similar phase angle behavior over time, this is a strong indication that an electric connection has been made between phases. As can be seen in Fig. 4, the phases are normally not correlated. The phase angle between phases is separated by 120 degrees. If the phase angles of two phases correlate or follow each other it is likely that an electric connection has been made between the two.

In one example, measured phase angles correlate if they both fall within a range of [-50 to 50 degrees], [-20 to 20 degrees] or [-5 to 5 degrees].

Additionally, or alternatively, the method 500 is terminated, and the switches S1-S4 are opened/de-activated when any of the electric connections (210-230) are detected.

Additionally, or alternatively, the method 500 is terminated and/or the switches S1-S4 are opened/de-activated when a fuse of the system 100 cuts off power.

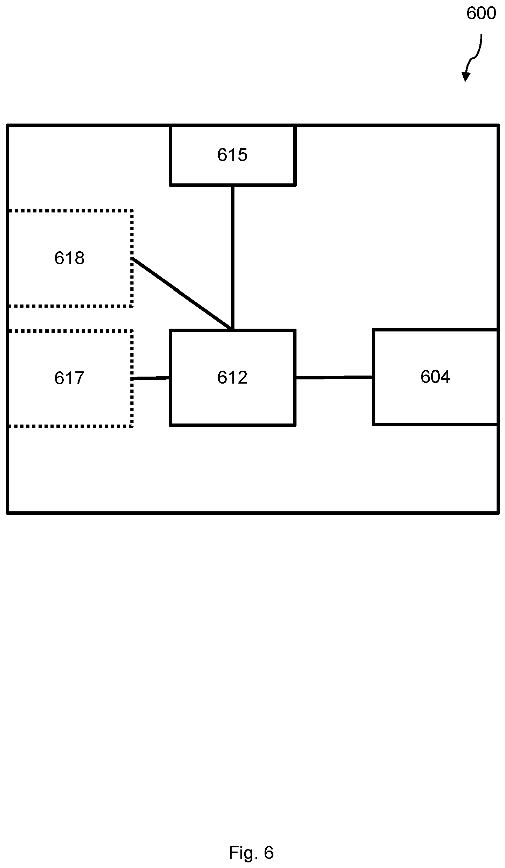

**Fig. 6** shows a computer 600 according to one or more embodiments of the present disclosure. The computer 600 may e.g., be in the form of an EVSE, an Electronic Control arrangement, a server, an on-board computer, a vehicle mounted computer system or a navigation device.

The control arrangement 600 may comprise a processor or processing means 612 optionally communicatively coupled to a transceiver 604 configured for wired or wireless communication. Further, the control arrangement 600 may further comprise at least one optional antenna (not shown in figure). The antenna may be coupled to the transceiver 604 and is configured to transmit and/or emit and/or receive wireless signals in a wireless communication system.

The wired or wireless signals may comprise information of measured voltage levels at output ports and/or measured phase angles at output ports and/or detected electric connections 210-260 that may be used by a central node for analysis or fault identification. In one example, the processor 612 may be any of a selection of processing circuitry and/or a central processing unit and/or processor modules and/or multiple processors configured to cooperate with each-other.

Further, the control arrangement 600 may further comprise a memory 615. The memory 615 may contain instructions executable by the processor to perform any of the methods described herein. The memory and/or computer-readable storage medium referred to herein may comprise of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

In a further embodiment, the control arrangement 600 may further comprise and/or be coupled to one or more sensors configured to e.g., receive and/or obtain and/or measure physical properties pertaining to the control arrangement 600.

In one or more embodiments the control arrangement 600 may further comprise an input device 617, configured to receive input or indications from a user and send a user-input signal indicative of the user input or indications to the processor or processing means 612.

In one or more embodiments the control arrangement 600 may further comprise a display 618 configured to receive a display signal indicative of rendered objects, such as text or graphical user input objects, from the processor or processing means 612 and to display the received signal as objects, such as text or graphical user input objects.

In one embodiment the display 618 is integrated with the user input device 617 and is configured to receive a display signal indicative of rendered objects, such as text or graphical user input objects, from the processing means 612 and to display the received signal as objects, such as text or graphical user input objects, and/or configured to receive input or indications from a user and send a user-input signal indicative of the user input or indications to the processing means 612.

In embodiments, the processing means 612 is communicatively coupled to a selection of any of the memory 615 and/or the communications interface and/or transceiver and/or the input device 617 and/or the display 618 and/or the one or more sensors. In embodiments, the transceiver 604 communicates using wired and/or wireless communication techniques. The wired or wireless communication techniques may comprise any of a CAN bus, Data Distribution Service (DDS), Bluetooth, Wi-Fi, GSM, UMTS, LTE or LTE advanced communications network or any other wired or wireless communications network known in the art.

In embodiments, the communications network communicate using wired or wireless communication techniques that may include at least one of a Local Area Network (LAN), Metropolitan Area Network (MAN), Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth^{®}, Zigbee^{®}, Wi-Fi, Voice over Internet Protocol (VoIP), LTE Advanced, IEEE802.16m, Wireless MAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst^{®}) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (WiMAX) and ultrasonic communication, etc., but is not limited thereto.

Moreover, it is realized by the skilled person that the control arrangement 600 may comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, encoder, decoder, power supply units, power feeders, communication interfaces, communication protocols, etc. which are suitably arranged together for performing the present solution.

The computer 600 may be implanted as any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner

Especially, the processor and/or processing means of the present disclosure may comprise one or more instances of processing circuitry, processor modules and multiple processors configured to cooperate with each-other, Central Processing Unit (CPU), a processing unit, a processing circuit, a processor, an Application Specific Integrated Circuit (ASIC), a microprocessor, a Field-Programmable Gate Array (FPGA) or other processing logic that may interpret and execute instructions. The expression "processor" and/or "processing means" may thus represent a processing circuitry comprising a plurality of processing circuits, such as, e.g., any, some or all the ones mentioned above. The processing means may further perform data processing functions for inputting, outputting, and processing of data comprising data buffering and device control functions, such as call processing control, user interface control, or the like.

In one embodiment, a control arrangement 600 is provided and adapted to be comprised in an EVSE 110, the control arrangement 600 comprising:
a processor 612, and
a memory 615, said memory containing instructions executable by said processor, wherein said control arrangement 600 is configured to perform any of the methods described herein.

The control arrangement 600 may in embodiments be comprised in an EVSE 110.

Finally, it should be understood that the invention is not limited to the embodiments described above, but also relates to and incorporates all embodiments within the scope of the appended independent claims.

## Claims

1. A method performed by an electric vehicle supply equipment, EVSE (110), configured to provide power from a 3-phase power grid (120) to a vehicle (140), the method comprising:
controlling a first switch (S1) of the EVSE to couple neutral (N) of the 3-phase power grid (310) to a first output port (OP1) at a first point in time (P1),
controlling a second switch (S2) of the EVSE to couple a first phase (L1) of the power grid (120) to a second output port (OP2) at a second point in time (P2),
detect a first electric connection (210) between the second output port (OP2) and a third output port (OP3),
controlling a third switch (S3) of the EVSE (110) to couple a second phase (L2) of the power grid (120) to a third output port (OP3), wherein the third switch (S3) is controlled at a third point (P3) in time if the first electric connection is not detected, or at a fourth point in time (P4) if the first electric connection is detected,
detect a second electric connection (220) between a fourth output port (OP4) and the second output port (OP2) or a third electric connection (230) between the fourth output port (OP4) and a third output port (OP3),
controlling a fourth switch (S4) of the EVSE (110) to couple a third phase (L3) of the power grid (120) to the fourth output port (OP4), wherein the fourth switch (S4) is controlled:
at a fifth point in time (P5) if the second electric connection (220) is detected,
or at a sixth point in time (P6) if none of the second electric connection (220) and the third electric connection (230) are detected,
or at a seventh point in time (P7) if the third electric connection (230) is detected between the fourth output port (OP4) and the third output port (OP3),
wherein the first point in time (P1), the second point in time (P2), the third point in time (P3), the fourth point in time (P4), the fifth point in time (P5), the sixth point in time (P6) and the seventh point in time (P7) are each unique.

2. The method according to claim 1, wherein the first point in time (P1), the second point in time (P2), the third point in time (P3), the fourth point in time (P4), the fifth point in time (P5), the sixth point in time (P6) and the seventh point in time (P7) are selected from points in time where measured voltage differences between pairs of phases or measured voltage differences between a phase and neutral of the 3-phase power of the power grid (120) are substantially zero.

3. The method according to claim 2, wherein the second point in time (P2) is selected adjacent to a point in time of a zero-crossing of the first phase (L1).

4. The method according to claim 2, wherein the third point in time (P3) is selected adjacent to a point in time of a zero-crossing of the second phase (L2) and the fourth point in time (P4) is selected adjacent to a point in time of substantially equal voltage between the first phase (L1) and the second phase (L2).

5. The method according to claim 2, wherein the fifth point in time (P5) is selected adjacent to a point in time of substantially equal voltage between the first phase (L1) and the third phase (L3).

6. The method according to claim 2, wherein the sixth point in time (P6) is selected adjacent to a point in time of a zero-crossing of the third phase (L3).

7. The method according to claim 2, wherein the seventh point in time (P7) is selected adjacent to a point in time of substantially equal voltage between the second phase (L2) and the third phase (L3).

8. The method according to claim 1, wherein the first electric connection, the second electric connection and the third electric connection between output ports are detected if measured voltage differences between respective output ports (OP1-OP4) are correlated, and not detected if measured voltage differences at respective output ports are not correlated.

9. The method according to claim 1, wherein the first electric connection, the second electric connection and the third electric connection between output ports are detected if measured phase angles differences between respective output ports (OP1-OP4) are correlated, and not detected if measured phase angle differences at respective output ports are not correlated.

10. The method according to any of the preceding claims, where the method is terminated, and the switches (S1-S4) are opened when any of the electric connections (210-230) are detected.

11. A control arrangement 600 adapted to be comprised in an EVSE 110, the control arrangement 600 comprising:
a processor 612, and
a memory 615, said memory containing instructions executable by said processor, wherein said control arrangement 600 is configured to perform the method according to any of claims 1-12.

12. An Electric Vehicle Supply Equipment, EVSE, 110 configured to provide power from a 3-phase power grid (120) to a vehicle (140), the EVSE 110 comprising the control arrangement 600 according to claim 11.
